# EUROPEAN PATENT SPECIFICATION

(11) **EP 3 567 607 B1**
(45) Date of publication and mention of the grant of the patent: **20.10.2021**
(21) Application number: 18736755.2
(22) Date of filing: 02.01.2018
(51) Int. Cl.: G21C 9/016, G21C 15/18, G21C 15/243

(54) **PASSIVELY-OPERATED CORIUM COOLING APPARATUS**
PASSIV BETRIEBENE CORIUMKÜHLVORRICHTUNG
APPAREIL DE REFROIDISSEMENT DE CORIUM À COMMANDE PASSIVE

(30) Priority: 03.01.2017 KR 20170000817
(43) Date of publication of application: 13.11.2019
(73) Proprietor: Korea Hydro & Nuclear Power Co., Ltd, Gyeongju-si, Gyeongsangbuk-do 38120 (KR)
(72) Inventor: HEO, Sun, Daejeon 35355 (KR); HWANG, Do Hyun, Sejong 30130 (KR)
(74) Representative: Habermann, Hruschka & Schnabel
(86) International application number: PCT/KR2018/000004
(87) International publication number: WO 2018/128338

(56) References cited:
- EP-A1- 2 581 913
- EP-A2- 2 602 793
- JP-A- 2005 195 595
- JP-A- 2016 011 910
- KR-B1- 101 005 668
- KR-B1- 101 585 841
- US-A- 4 442 065
- US-A1- 2009 080 589

## Description

### [Technical Field]

The present invention relates to a passive molten core cooling apparatus for cooling a molten core in a severe accident when a core contained in a reactor vessel is melted.

### [Background Art]

During a normal operation of a nuclear power plant, a core inside a reactor vessel is cooled by coolant circulated by a coolant pump. However, when a severe accident such as a coolant loss or a loss of the pump power occurs, core cooling will no longer be performed. Thus, the temperature of the core is increased and reaches the core melting temperature. Thus, the core is melted and the molten core is relocated on a bottom of the nuclear reactor vessel.

In this severe accident, a molten core cooling method is used to cool the molten core by supplying coolant. A core catcher as a molten core collecting and cooling facility is installed on the bottom of the reactor cavity to cool the molten core vertically.

In the conventional approach, the coolant is not filled in the reactor cavity before the accident. In the event of a severe accident in which the molten core is discharged into the reactor cavity, and at the moment the molten core is expected to be released, the coolant is filled into the to prevent the phenomena such as steam explosion occurring when the high temperature molten core may encounter with the low-temperature coolant, and to facilitate the operation of the nuclear power plant. Further, in order to supply the coolant, it is necessary to operate the motor-operated valve via determination of the operator or via an automatic circuit driven by the measuring device and the control equipment. Alternatively, a method using a mechanical valve driven by the molten core discharge has been used in order to supply the coolant.

However, in the conventional approach, there are various factors such as failure of the equipment and facilities, loss of the operating power of the equipment due to long-term accident progress, adverse effects due to malfunction of the equipment, or the operator's misjudgment, etc. Those could seriously affect the safety of the plant.

From EP 2 602 793 A2 a passive molten core cooling apparatus according to the preamble of claim 1 is known. Further configurations are, for example, described in EP 2 581 913 A1 and US 4,442,065 A.

### [Disclosure]

### [Technical Problem]

Accordingly, the present invention has been made to solve the above-mentioned problems. The present invention provides a passive molten core cooling apparatus for cooling a molten core in a severe accident that a core accommodated in a reactor vessel is melted.

### [Technical Solution]

The present invention provides a passive molten core cooling apparatus having the features of claim 1.

According to the invention, there is proposed a passive molten core cooling apparatus comprising amongst others: a reactor vessel; a core catcher located below the reactor vessel; a channel structure having a coolant channel located below the core catcher and filled with a coolant; and a coolant tank communicating with the channel structure through a first pipe and supplying a coolant to the coolant channel through the first pipe, wherein the coolant channel is divided into a first channel adjacent to the core catcher and a second channel spaced away from the core catcher, wherein the first channel and the second channel are communicated to each other.

In one embodiment of the passive molten core cooling apparatus of claim 1, when a severe accident occurs, the coolant rises up along the first channel, and the coolant descends along the second channel, such that the coolant is spontaneously circulated through the coolant channel.

In one embodiment of the passive molten core cooling apparatus, the coolant channel includes: a start portion of an upwards path along which the coolant begins to rise up along the first channel; and a start portion of a downwards path along which the coolant begins to descend along the second channel.

In one embodiment of the passive molten core cooling apparatus, the coolant channel is constructed such that the first channel and the second channel are in communication with each other at the start portion of the upwards path and the start portion of the downwards path.

In one embodiment of the passive molten core cooling apparatus, the channel structure includes a partition member for partitioning the coolant channel into the first channel and the second channel.

In one embodiment of the passive molten core cooling apparatus, the partition member has a plate shape.

According to the invention the apparatus further includes a second pipe, wherein one end of the second pipe is in communication with the channel structure, and the other end thereof is exposed to an atmosphere, wherein the second pipe discharges vapor generated via the coolant circulation in the coolant channel to the atmosphere.

According to the invention the coolant tank is disposed above the channel structure.

According to the invention the coolant tank has: a first space filled with the coolant; and a second space, wherein steam discharged through the second pipe is discharged into the atmosphere through the second space.

### [Advantageous Effects]

According to the present invention, the passive molten core cooling apparatus is provided to cool the molten core in the event of accidentally melting the core contained in the nuclear reactor vessel.

Further, the passive molten core cooling apparatus is provided that maintains a constant coolant amount due to hot molten core and coolant heating, natural circulation by boiling, and passive replenishment of coolant from the coolant tank. In this connection, any mechanical parts that need to be operated for the operation of the equipment are not required. This can prevent the effects from the equipment failure or operator's mistake.

In addition, the molten core and coolant cannot come into direct contact with each other, so that the molten core-coolant reaction leading to the steam explosion can be prevented.

### Description of Drawings]

FIG. 1 is a cross-sectional view of a passive molten core cooling apparatus according to one embodiment of the present invention.
FIG. 2 is an enlarged cross-sectional view of a channel structure of FIG. 1.
FIG. 3 is a cross-sectional view of a passive molten core cooling apparatus showing circulation of coolant according to one embodiment of the present invention. [Mode for Invention]

The present invention will now be described in more detail with reference to the drawings.

The accompanying drawings are merely illustrative examples for the purpose of more specifically describing the technical idea of the present invention, and thus the present invention is not limited to the accompanying drawings. The invention is defined in the appended claims. Further, the accompanying drawings may be exaggerated in size and spacing in order to describe the relationship between components.

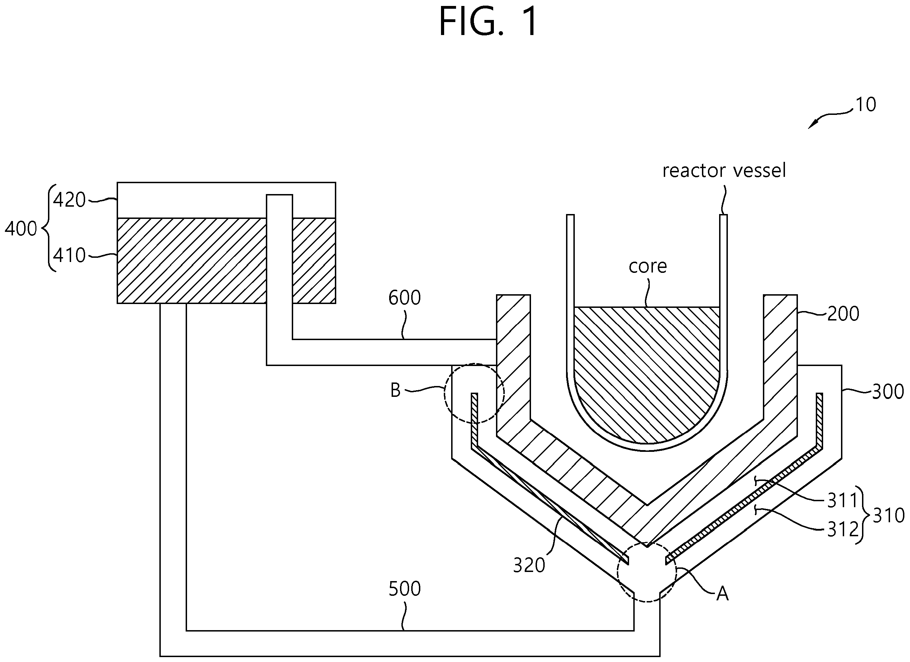

Referring to FIG. 1, a passive molten core cooling apparatus according to one embodiment of the present invention is described.

FIG. 1 is a cross-sectional view of a passive molten core cooling apparatus according to one embodiment of the present invention.

A passive molten core cooling apparatus 10 according to one embodiment of the present invention includes a nuclear reactor vessel, a core catcher 200 located below the nuclear reactor vessel, a channel structure 300 having a coolant channel 310 and located below the core catcher 200 and filled with a coolant, and a coolant tank 400 communication with the channel structure 300 via a first pipe 500 for supplying a coolant to the coolant channel 310 through the first pipe 500.

Further, the device 10 includes a second pipe 600. One end of the second pipe communicates with the channel structure 300 while the other end of the second pipe is exposed to the atmosphere. The second pipe discharges the steam generated through the coolant circulation in the coolant channel 310 to the atmosphere.

The core is located inside the nuclear reactor vessel.

The core catcher 200 is disposed outside the reactor vessel and spaced from the vessel at a predetermined spacing and surrounds the nuclear reactor vessel.

The core catcher 200 may be made of a metal material. However, the present invention is not limited thereto. In order to support the load of the molten core, the thickness of the core catcher may be larger than a certain thickness. For example, the thickness is several centimeters or larger.

Although not shown, a sacrificial material layer may be positioned between the reactor vessel and the core catcher 200. The sacrificial material layer is intended to prevent impact due to high-temperature molten core release in the event of severe accident, and to melt into the molten core to reduce an amount of heat generation per unit volume.

The channel structure 300 is located below the core catcher 200 and has the coolant channel 310 filled with a coolant.

Out of the channel structure 300, the coolant tank 400 for supplying a coolant to the coolant channel 310 through the first pipe 500 is formed.

The coolant tank 400 is located above the channel structure 300. The tank has a first space 410 filled with a coolant and a second space 420 through which the steam generated by the coolant circulation inside the coolant channel 310 is discharged.

The first pipe 500 for supplying a coolant to the coolant channel 310 is provided below the channel structure 300. A second pipe 600 for discharging steam generated through the coolant circulation in the coolant channel 310 to the atmosphere is provided above the channel structure.

One end of the first pipe 500 is connected to the coolant tank 400, and the other end of the first pipe 500 is connected to the channel structure 300. The first pipe receives the coolant from the coolant tank 400 and supplies coolant to a start portion A of an upward path located below the coolant channel 310.

Although not shown, additional valves may be installed in the first pipe 500 to regulate the amount of coolant flowing into the channel structure 300 through the first pipe 500.

One end of the second pipe 600 is connected to the channel structure 300 and the other end thereof is connected to the coolant tank 400. The second pipe discharges the vapor generated in the coolant channel 310 to the second space 420 inside the coolant tank 400.

The second pipe 600 was filled with a coolant before the severe accident. When the severe accident occurs in which the core is melted, a coolant in a liquid state and a vapor state are mixed therein. The liquid vapor in the vapor state is discharged to the second space 420 inside the coolant tank 400 through the second pipe 600.

Although not shown, a moisture separator and additional cooling equipment for increasing the collected number of droplets of the vapor discharged to the outside from the second space 420 may be additionally provided.

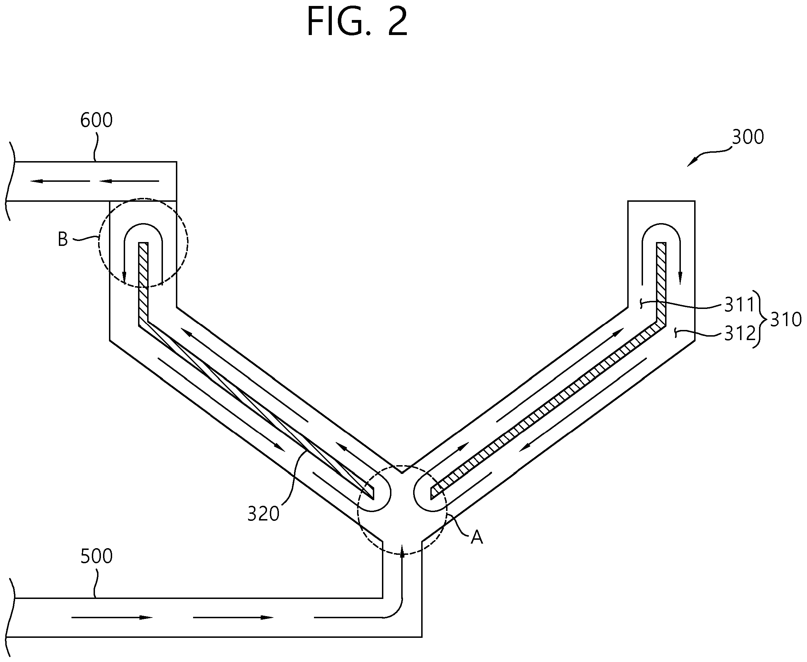

Referring to FIG. 2, the channel structure of the present invention is described.

FIG. 2 is an enlarged cross-sectional view of the channel structure of FIG. 1.

The channel structure 300 is located below the core catcher 200 and has the coolant channel 310 filled with a coolant.

The coolant channel 310 is divided into a first channel 311 adjacent to the core catcher 200 and a second channel 312 separated from the core catcher 200.

The channel structure 300 according to one embodiment of the present invention includes a partition member 320 for partitioning the first channel 311 and the second channel 312.

It is needless to say that the partition member 320 may be formed in a plate shape, but the present invention is not limited thereto, and the shape may be variously changed or may be modified as long as the shape is capable of generating coolant circulation in the coolant channel 310. Although not shown, a spacing maintaining portion for maintaining the spacing between the channels may be located in the form of scattering points or the like. In this case, the partition member 320 may be appropriately modified according to the shape and arrangement of the spacing maintaining portion.

The coolant channel 310 includes a start portion A of the upwards path along which the coolant begins to rise upward along the first channel 311, and a start portion B of the downwards path along which the coolant begins to descend downward along the second channel 312.

The first channel 311 and the second channel 312 are in communication with each other in the start portion A of the upwards path and the start portion B of the downwards path.

In a severe accident that the core is melted, the coolant rises along the first channel 311 and the coolant descends along the second channel 312. Thus, the coolant spontaneously cycle along and in the coolant channel 310.

The natural or spontaneous circulation may be described in detail as follows. In the case of the severe accident, the coolant supplied to the channel structure 300 through the first pipe 500 is heated due to the heat generated by the high-temperature molten core.

Thereafter, the coolant rising up along the first channel 311 is circulated from the start portion B of the downwards path, and descends along the second channel 312, and is recirculated again from the start portion A of the upwards path. In this connection, a portion of the coolant is vented to the atmosphere through the second pipe 600 in the vapor form.

By the discharged coolant, new coolant is replenished passively from the coolant tank 400 so that the channel structure 300 is filled with the coolant. This improves the cooling efficiency due to the addition of the coolant and smooths the natural circulation flow.

Accordingly, according to the present invention, the natural circulation of the coolant through the upwards flow and the downwards flow in the coolant channel 310 is performed. Thus, the molten core cooling using the coolant is efficiently performed.

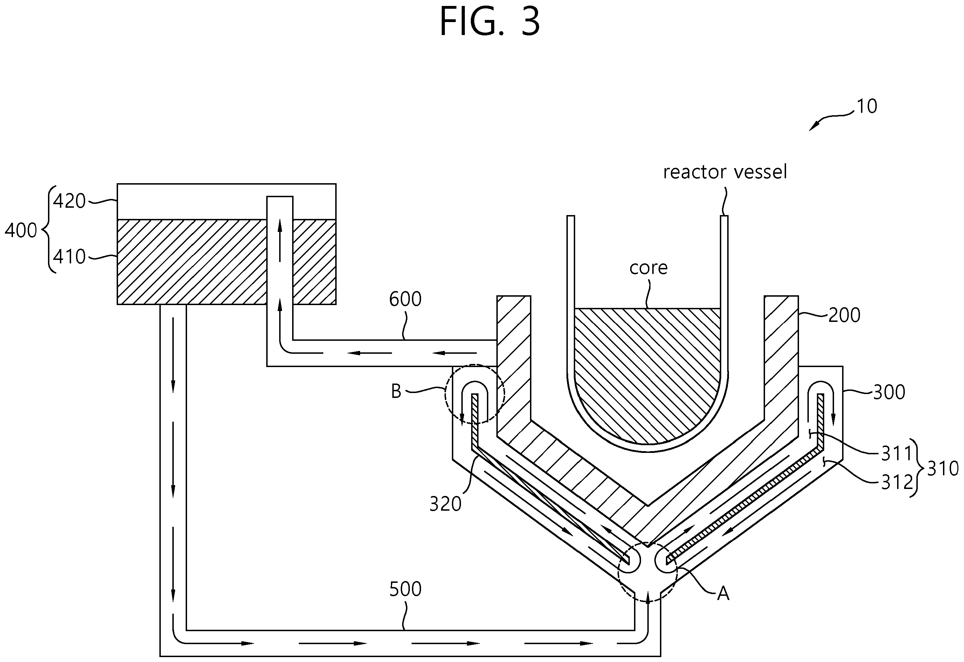

The coolant circulation in a passive molten core cooling apparatus according to the present invention is described with reference to FIG. 3.

FIG. 3 is a cross-sectional view of a passive molten core cooling apparatus showing the circulation of the coolant according to the present invention.

In accordance with the present invention, prior to the severe accident, the coolant tank 400, the first pipe 500 and the channel structure 300 were all filled with coolant. The coolant is maintained at a constant temperature due to the core catcher 200 spaced apart from the nuclear reactor vessel by a predetermined spacing and the sacrificial material layer formed between the core reactor 200 and the nuclear reactor vessel.

When the core melting occurs, the molten core penetrates the reactor vessel and melts the sacrificial material layer, the leaked molten core is collected by the core catcher 200 that collects the molten core that flows down or falls freely from the nuclear reactor vessel. In this connection, the coolant inside the channel structure 300 having the coolant channel 310 located below the core catcher 200 and filled with the coolant is heated. The coolant raised along the first channel 311 descends along the second channel 312 such that the natural circulation of the coolant through the coolant channel 310 is performed.

Specifically, as shown in FIG. 3, in a severe accident where the core is melted, the coolant heated by the heat generated by the high temperature molten core rises along the first channel 311 from the start portion A of the upwards path of the channel structure 300 and reaches and turns around and descends downwards along the start portion B of the downward path. The coolant descends along the second channel 312 and is recirculated again from the start portion A of the upwards path.

In this connection, a portion of the coolant that spontaneously circulates in and along the coolant channel 310 may be vented to the atmosphere through the second pipe 600 in vapor form. Only some droplets are collected through the second space 420 of the coolant tank 400 as a liquid coolant.

Although not shown, a moisture separator and a separate cooling facility may be additionally provided to increase the collection of the liquid droplets discharged to the outside from the second space 420.

Thereafter, the coolant as much as the amount of the vapor discharged to the atmosphere through the second pipe 600 is supplied to the first pipe 500 from the coolant tank 400 arranged at a higher level than the channel structure 300 due to the gravity. The coolant supplied through the first pipe 500 flows into the start portion A of the upwards path at the bottom of the channel structure 300.

In this process, the complete filling of the coolant in the coolant channel 310 in the channel structure 300 is performed passively such that a certain amount of cooling water is maintained therein.

According to the present invention, the passive molten core cooling apparatus is provided that maintains a constant coolant amount due to hot molten core and coolant heating, natural circulation by boiling in the coolant channel 310, and passive replenishment of coolant from the coolant tank. In this connection, any mechanical parts that need to be operated for the operation of the equipment are not required. This can prevent the effects from the equipment failure or operator's mistake.

In addition, the molten core and coolant cannot come into direct contact with each other, so that the molten core-coolant interaction leading to the steam explosion can be prevented.

The embodiments as described above are illustrative of the present invention, and the present invention is not limited thereto. It will be understood by those skilled in the art that various changes in form and details may be made therein without departing from the scope of the present invention as defined by the appended claims.

## Claims

1. A passive molten core cooling apparatus (10) comprising:
a reactor vessel;
a core catcher (200) located below the reactor vessel;
a channel structure (300) having a coolant channel (310) located below the core catcher (200) and filled with a coolant; and
a coolant tank (400) communicating with the channel structure (300) through a first pipe (500) and supplying a coolant to the coolant channel (310) through the first pipe (500),
wherein the coolant channel (310) is divided into a first channel (311) adjacent to the core catcher (200) and a second channel (312) spaced away from the core catcher (200), wherein the first channel (311) and the second channel (312) are communicated to each other;
wherein the apparatus (10) further includes a second pipe (420),
wherein one end of the second pipe (420) is in communication with the channel structure (300), and the other end thereof is exposed to an atmosphere,
wherein the second pipe (420) is configured to discharge vapor generated via the coolant circulation in the coolant channel (310) to the atmosphere,
wherein the coolant tank (400) is disposed above the channel structure (310),
wherein the coolant tank (400) has a first space (410) filled with the coolant and a second space (420) configured such that steam discharged through the second pipe (600) is discharged into the atmosphere through the second space (420),
wherein the coolant channel (310) is configured such that the coolant in the coolant channel (310) flows upwardly and downwardly and thus spontaneously circulates in the coolant channel (310), and
wherein the coolant tank (400) is configured such that coolant is replenished passively from the coolant tank (400) by an amount of coolant as discharged through the second pipe (600) in a vapor state.

2. The passive molten core cooling apparatus (10) of claim 1, wherein the first channel (311) and the second channel (312) are configured such that, when a severe accident occurs, the coolant rises up along the first channel (311), and the coolant descends along the second channel (312), such that the coolant is spontaneously circulated through the coolant channel (310).

3. The passive molten core cooling apparatus (10) of claim 2, wherein the coolant channel (310) includes:
a start portion of an upwards path along which the coolant can begin to rise up along the first channel (311); and
a start portion of a downwards path along which the coolant can begin to descend along the second channel (312).

4. The passive molten core cooling apparatus (10) of claim 3, wherein the coolant channel (310) is constructed such that the first channel (311) and the second channel (312) are in communication with each other at the start portion of the upwards path and the start portion of the downwards path.

5. The passive molten core cooling apparatus (10) of claim 1, wherein the channel structure (300) includes a partition member (320) for partitioning the coolant channel (310) into the first channel (311) and the second channel (312).

6. The passive molten core cooling apparatus (10) of claim 5, wherein the partition member has (320) a plate shape.

## Patentansprüche

1. Passive Kernschmelzen-Kühlvorrichtung (10) aufweisend:
einen Reaktorbehälter;
einen Kernfänger (200), der unterhalb des Reaktorbehälters angeordnet ist;
eine Kanalstruktur (300) mit einem Kühlmittelkanal (310), der unterhalb des Kernfängers (200) angeordnet und mit einem Kühlmittel gefüllt ist; und
einen Kühlmitteltank (400), der mit der Kanalstruktur (300) über ein erstes Rohr (500) in Verbindung steht und dem Kühlmittelkanal (310) über das erste Rohr (500) ein Kühlmittel zuführt,
wobei der Kühlmittelkanal (310) in einen ersten Kanal (311), der an den Kernfänger (200) angrenzt, und einen zweiten Kanal (312), der von dem Kernfänger (200) beabstandet ist, unterteilt ist, wobei der erste Kanal (311) und der zweite Kanal (312) miteinander in Verbindung stehen;
wobei die Vorrichtung (10) ferner ein zweites Rohr (420) aufweist,
wobei ein Ende des zweiten Rohrs (420) in Verbindung mit der Kanalstruktur (300) steht und das andere Ende davon einer Atmosphäre ausgesetzt ist,
wobei das zweite Rohr (420) so konfiguriert ist, dass es Dampf, der durch die Kühlmittelzirkulation in dem Kühlmittelkanal (310) erzeugt wird, an die Atmosphäre abgibt,
wobei der Kühlmitteltank (400) oberhalb der Kanalstruktur (310) angeordnet ist,
wobei der Kühlmitteltank (400) einen ersten Raum (410), der mit dem Kühlmittel gefüllt ist, und einen zweiten Raum (420) aufweist, der so konfiguriert ist, dass Dampf, der durch das zweite Rohr (600) abgeleitet wird, durch den zweiten Raum (420) in die Atmosphäre abgeleitet wird,
wobei der Kühlmittelkanal (310) so konfiguriert ist, dass das Kühlmittel im Kühlmittelkanal (310) nach oben und nach unten fließt und somit spontan im Kühlmittelkanal (310) zirkuliert, und
wobei der Kühlmitteltank (400) so konfiguriert ist, dass das Kühlmittel passiv aus dem Kühlmitteltank (400) durch eine Menge an Kühlmittel nachgefüllt wird, die durch das zweite Rohr (600) in einem dampfförmigen Zustand abgeleitet wird.

2. Passive Kernschmelzen-Kühlvorrichtung (10) nach Anspruch 1, bei der der erste Kanal (311) und der zweite Kanal (312) so konfiguriert sind, dass bei einem schweren Unfall das Kühlmittel entlang des ersten Kanals (311) aufsteigt und das Kühlmittel entlang des zweiten Kanals (312) absteigt, so dass das Kühlmittel spontan durch den Kühlmittelkanal (310) zirkuliert.

3. Passive Kernschmelzen-Kühlvorrichtung (10) nach Anspruch 2, bei der der Kühlmittelkanal (310) umfasst:
einen Anfangsabschnitt eines Aufwärtspfads, entlang dessen das Kühlmittel beginnt, entlang des ersten Kanals (311) aufzusteigen; und
einen Anfangsabschnitt eines Abwärtspfads, entlang dessen das Kühlmittel beginnt, entlang des zweiten Kanals (312) abzusteigen.

4. Passive Kernschmelzen-Kühlvorrichtung (10) nach Anspruch 3, bei der der Kühlmittelkanal (310) so konstruiert ist, dass der erste Kanal (311) und der zweite Kanal (312) im Anfangsabschnitt des Auswärtspfads und im Anfangsabschnitt des Abwärtspfads miteinander in Verbindung stehen.

5. Passive Kernschmelzen-Kühlvorrichtung (10) nach Anspruch 3, bei der die Kanalstruktur (300) ein Trennelement (320) zum Aufteilen des Kühlmittelkanals (310) in den ersten Kanal (311) und in den zweiten Kanal (312) umfasst.

6. Passive Kernschmelze-Kühlvorrichtung (10) nach Anspruch 5, bei der das Trennelement (320) die Form einer Platte hat.

## Revendications

1. Appareil de refroidissement de cœur fondu passif (10), comprenant :
une cuve de réacteur ;
un récupérateur de cœur (200) situé au-dessous de la cuve de réacteur ;
une structure de canal (300) présentant un canal de réfrigérant (310) situé en dessous du récupérateur de cœur (200) et rempli d'un réfrigérant ; et
un réservoir de réfrigérant (400) communiquant avec la structure de canal (300) par l'intermédiaire d'un premier tuyau (500) et fournissant un réfrigérant au canal de réfrigérant (310) par l'intermédiaire du premier tuyau (500),
dans lequel le canal de réfrigérant (310) est divisé en un premier canal (311) adjacent au récupérateur de cœur (200) et un second canal (312) espacé du récupérateur de cœur (200),
dans lequel le premier canal (311) et le second canal (312) sont mis en communication l'un avec l'autre ;
dans lequel l'appareil (10) comprend en outre un second tuyau (420),
dans lequel une première extrémité du second tuyau (420) est en communication avec la structure de canal (300), et son autre extrémité est exposée à une atmosphère,
dans lequel le second tuyau (420) est configuré pour évacuer de la vapeur générée via la circulation de réfrigérant dans le canal de réfrigérant (310) vers l'atmosphère,
dans lequel le réservoir de réfrigérant (400) est disposé au-dessus de la structure de canal (310),
dans lequel le réservoir de réfrigérant (400) présente un premier espace (410) rempli du réfrigérant et un second espace (420) configuré de telle sorte que de la vapeur évacuée à travers le second tuyau (600) est évacuée dans l'atmosphère à travers le second espace (420),
dans lequel le canal de réfrigérant (310) est configuré de telle sorte que le réfrigérant dans le canal de réfrigérant (310) s'écoule vers le haut et vers le bas et circule ainsi spontanément dans le canal de réfrigérant (310), et
dans lequel le réservoir de réfrigérant (400) est configuré de telle sorte que le réfrigérant est réapprovisionné passivement à partir du réservoir de réfrigérant (400) par une quantité de réfrigérant évacuée à travers le second tuyau (600) à l'état de vapeur.

2. Appareil de refroidissement de cœur fondu passif (10) selon la revendication 1, dans lequel le premier canal (311) et le second canal (312) sont configurés de telle sorte que, lorsqu'un accident grave se produit, le réfrigérant monte le long du premier canal (311), et le réfrigérant descend le long du second canal (312), de telle sorte que le réfrigérant est mis en circulation spontanément à travers le canal de réfrigérant (310).

3. Appareil de refroidissement de cœur fondu passif (10) selon la revendication 2, dans lequel le canal de réfrigérant (310) comprend :
une partie de départ d'un trajet ascendant le long duquel le réfrigérant peut commencer à monter le long du premier canal (311) ; et
une partie de départ d'un trajet descendant le long duquel le réfrigérant peut commencer à descendre le long du second canal (312) .

4. Appareil de refroidissement de cœur fondu passif (10) selon la revendication 3, dans lequel le canal de réfrigérant (310) est construit de telle sorte que le premier canal (311) et le second canal (312) sont en communication l'un avec l'autre au niveau de la partie de départ du trajet vers le haut et de la partie de départ du trajet vers le bas.

5. Appareil de refroidissement de cœur fondu passif (10) selon la revendication 1, dans lequel la structure de canal (300) comprend un élément de séparation (320) pour séparer le canal de réfrigérant (310) en le premier canal (311) et le second canal (312).

6. Appareil de refroidissement de cœur fondu passif (10) selon la revendication 5, dans lequel l'élément de séparation (320) présente une forme de plaque.
